(19) Europäisches Patentamt
European Patent Office
Office européen des brevets

(11) **EP 2 827 269 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(51) Int Cl.:
**G06F 21/44** *(2013.01)*   **G06K 7/10** *(2006.01)*

(21) Anmeldenummer: **13176875.6**

(22) Anmeldetag: **17.07.2013**

(54) **Verfahren zum Authentifizieren eines RFID-Tags**

Method for authenticating an RFID tag

Procédé d'authentification d'une puce RFID

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.01.2015 Patentblatt 2015/04**

(73) Patentinhaber: **Kapsch TrafficCom AG**
**1120 Wien (AT)**

(72) Erfinder: **Povolny, Robert**
**1190 Wien (AT)**

(74) Vertreter: **Weiser, Andreas**
**Patentanwalt**
**Kopfgasse 7**
**1130 Wien (AT)**

(56) Entgegenhaltungen:
**WO-A1-2008/085135     US-A1- 2010 289 627**

• **"Specification for RFID Air Interface EPC(TM) Radio-Frequency Identity Protocols Class-1 Generation-2 UHF RFID Protocol for Communications at 860 MHz - 960 MHz Version 1.2.0 Copyright notice Contents" In: "Specification for RFID Air Interface EPC(TM) Radio-Frequency Identity Protocols Class-1 Generation-2 UHF RFID Protocol for Communications at 860 MHz - 960 MHz Version 1.2.0 Copyright notice Contents", 23. Oktober 2008 (2008-10-23), XP055093111, * Seite 46 - Seite 47 * * Seite 54 ***

**Beschreibung**

Die vorliegende Erfindung betrifft ein Verfahren zum Authentifizieren eines RFID-Tags mit Hilfe eines RFID-Readers über eine Funkschnittstelle zwischen diesen, wobei im RFID-Reader ein benutzerspezifischer Schlüssel gespeichert ist und im RFID-Tag eine tagspezifische Kennung und ein aus der Kennung und dem Schlüssel nach einer bekannten Ableitungsfunktion erzeugtes Passwort gespeichert sind.

Derartige RFID-Tags (radio frequency identification tags bzw. transponder) sind nicht nur in der Warenlogistik zur Produktkennzeichnung weit verbreitet, siehe z.B. "Specification for RFID Air Interface EPC(TM) Radio-Frequency Identity Protocols Class-1 Generation-2 UHF RFID Protocol for Communications at 860 MHz - 960 MHz, Version 1.2.0, 23. Oktober 2008, XP05509311, sondern werden in zunehmender Maße auch als funklesbare Fahrzeugkennung bzw. funklesbarer Fahrerausweis in Straßenmaut- und Verkehrsüberwachungssystemen eingesetzt (e-lectronic toll collection, ETC; automatic vehicle identification, AVI). Dabei kommt es auf Fälschungssicherheit der RFID-Tags an, damit nicht ein Fahrzeugkennzeichen oder eine Benutzeridentität gefälscht werden und jemand auf Kosten bzw. zu Lasten eines Dritten Mautgebühren oder Verkehrsvergehen akkumuliert.

Einfache Authentifizierungsprotokolle wurden bereits in den am weitesten verbreiteten RFID-Tag-Standards implementiert, z.B. in den ISO-Standards 18000-6C bzw. 18000-63. Diese Authentifizierungsprotokolle beruhen auf der Verwendung des vorgenannten Passworts ("access password"), das einerseits aus einem geheimen, nur dem die RFID-Tags ausgebenden Benutzer bekannten Schlüssel und einer individuell in jedem Tag gespeicherten Tag-Kennung zusammengesetzt wird. Nur dieses Passwort wird im jeweiligen Tag gespeichert. Aus der bloßen Kenntnis des Passworts ist der Schlüssel nicht rekonstruierbar, d.h. die Ableitungsfunktion (Bildungsfunktion) für das Passwort ist unumkehrbar bzw. nicht eindeutig umkehrbar. Wenn ein RFID-Reader die Authentizität eines RFID-Tags verifizieren möchte, liest er bzw. sie zunächst die tagspezifische Kennung aus dem RFID-Tag aus, bildet in Kenntnis des benutzerspezifische Schlüssels das Passwort (access password) nach und sendet dieses an das RFID-Tag. Das RFID-Tag überprüft das empfangene Passwort mit dem gespeicherten Passwort und sendet im Gleichheitsfall eine Bestätigungsantwort an den RFID-Reader zurück, siehe z.B. US 2010/0289627 A1 oder WO 2008/085135 A1.

Die Erfindung setzt sich zum Ziel, ein solches Verfahren zum Authentifizieren von RFID-Tags sicherer zu gestalten, um Betrugsversuche zu erkennen.

Dieses Ziel wird mit einem Verfahren der eingangs genannten Art erreicht, das sich durch die folgenden, im RFID-Reader ablaufenden Schritte auszeichnet:

Empfangen der Kennung eines zu authentifizierenden RFID-Tags über die Funkschnittstelle,
Erzeugen des richtigen Passworts aus der empfangenen Kennung und dem gespeicherten Schlüssel nach der bekannten Ableitungsfunktion, und Erzeugen zumindest eines vom richtigen Passwort abweichenden falschen Passworts,
Senden einer Folge von zumindest zwei Passwörtern, von denen zumindest eines richtig und zumindest eines falsch ist, über die Funkschnittstelle an das RFID-Tag, und
Authentifizieren des RFID-Tags, wenn zu keinem falschen Passwort eine Bestätigungsantwort empfangen wird.

Die Erfindung beruht auf der Erkenntnis der Anmelderin, dass die bekannten Authentifizierungsprotokolle kompromittiert werden könnten, wenn die RFID-Kennung aus einem "echten" Tag ausgelesen und in ein anderes ("gefälschtes") Tag kopiert wird, welches - da es nicht über die Kenntnis des richtigen, zu dieser Tag-Kennung passenden Passwords verfügt - auf den Erhalt jedes beliebigen Passworts mit einer Bestätigungsantwort reagiert. Solche gefälschte Tags können auf sehr einfachem Weg durch sogenannte "Tag-Emulatoren" realisiert werden, welche z.B. mittels eines Mikrocontrollers das RFID-Protokoll nachbilden; dies erlaubt eine gezielte Nachahmung des Verhaltens eines Tags durch einen Fälscher. Die Anmelderin hat erkannt, dass durch wiederholtes Senden mehrer Passwörter, von denen zumindest eines "falsch" ist, anhand der Reaktion des RFID-Tags auf überraschend einfache Art festgestellt werden kann, ob es sich um ein echtes oder gefälschtes RFID-Tag handelt. Das geschilderte Authentifizierungsverfahren erfordert keinerlei Veränderung an dem RFID-Tag selbst, so dass herkömmliche, standardkonforme RFID-Tags weiterverwendet werden können.

Bevorzugt wird die Abfolge von richtigen und falschen Passwörtern in der genannten Folge zufällig gewählt, so dass ein gefälschtes Tag nicht eine bestimmte Abfragesequenz erwarten und z.B. mit einer standardisierten Antwortsequenz antworten kann.

Gemäß einer bevorzugten Variante kann das Senden der Folge abgebrochen werden, sobald zu einem falschen Passwort eine Bestätigungsantwort erhalten wird, um die Belegung der Funkschnittstelle zu minimieren. Aus demselben Grund ist es auch möglich, dass das Senden der Folge abgebrochen wird, sobald zu einem richtigen Passwort keine Bestätigungsantwort erhalten wird, und das RFID-Tag daraufhin nicht authentifiziert wird.

Wenn zu einem richtigen Passwort keine Bestätigungsantwort erhalten wird, muss dies nicht immer zwingend auf ein gefälschtes RFID-Tag hinweisen, es könnte auch bloß die Funkschnittstelle unterbrochen sein, weil das RFID-Tag die Funkreichweite der Funkschnittstelle verlassen hat. Um dies zu detektieren, kann gemäß einer weiteren Variante der Erfindung vorgesehen werden, dass das letzte Passwort der Folge stets ein richtiges Passwort ist: Wird innerhalb einer vorgegebenen Zeitspanne keine Bestätigungsantwort erhalten, ist die Funkschnittstelle unterbrochen und war möglicherweise auch schon vorher, bei einem falschen Passwort unterbrochen, so dass der gesamte Authentifizierungsprozess verworfen und das RFID-Tag nicht authentifiziert wird.

Alternativ kann das Senden der Folge solange fortgesetzt werden, solange sich das RFID-Tag in Funkreichweite der Funkschnittstelle befindet, so dass eine maximale Anzahl an Passwortübersendungen (richtige und falsche) durchgeführt werden kann, was die Erfolgschancen eines Betrugs mit einem gefälschten RFID-Tag minimiert. Das Überprüfen, ob sich das RFID-Tag noch in Funkreichweite befindet, kann dabei durch vom RFID-Reader ausgehende Funkabfragen gemessen werden; sobald auf eine solche Funkabfrage keine Antwort mehr erhalten wird, ist die Funkreichweite offensichtlich unterbrochen.

Gemäß einem weiteren Merkmal der Erfindung kann die Kennung eines RFID-Tags, das einmal zu einem falschen Passwort eine Bestätigungsantwort gesendet hat, in einer Blacklist gespeichert werden, um dann entsprechende Maßnahmen zu ergreifen. Beispielsweise kann nach dem Empfangen der Kennung eines zu authentifizierenden RFID-Tags überprüft werden, ob die empfangene Kennung in der Blacklist gespeichert ist, und wenn ja, das RFID-Tag nicht authentifiziert und das Verfahren abgebrochen werden. Ein einmal als gefälscht erkanntes RFID-Tag kann dann nicht mehr verwendet werden.

Die Erfindung ist für alle jene Kommunikationsstandards zwischen RFID-Tags und RFID-Readern geeignet, welche das eingangs erörterte Authentifizierungsprotokoll mit access passwords verwenden, insbesondere für die ISO-Standards 18000-6C und 18000-63 oder damit kompatible Standards, und erfordert keine Abänderung der RFID-Tags. Dies ist besonders vorteilhaft, da RFID-Tags ein kostengünstiges Massenprodukt sind, das in vielen Ausprägungsformen von verschiedensten Herstellern in breitem Umlauf ist und lediglich die Mindestanforderungen der genannten Standard erfüllen muss, so dass eine Änderung der Standards in Bezug auf diese Mindestanforderung für das hier geschilderte Authentifizierungsverfahren nicht erforderlich ist.

Die Erfindung wird nachstehend anhand von in den beigeschlossenen Zeichnungen dargestellten Ausführungsbeispielen näher erläutert. In Zeichnungen zeigen:

Fig. 1 die Funkverhältnisse zwischen einem RFID-Reader und einem diesen passierenden RFID-Tag im Rahmen des erfindungsgemäßen Verfahrens;

Fig. 2 ein Blockschaltbild und gleichzeitig Flussdiagramm des Verfahrens der Erfindung; und

die Fig. 3 bis 5 Sequenzdiagramme des auf der Funkschnittstelle zwischen RFID-Reader und RFID-Tag ablaufenden Datenverkehrs im Rahmen des erfindungsgemäßen Verfahrens.

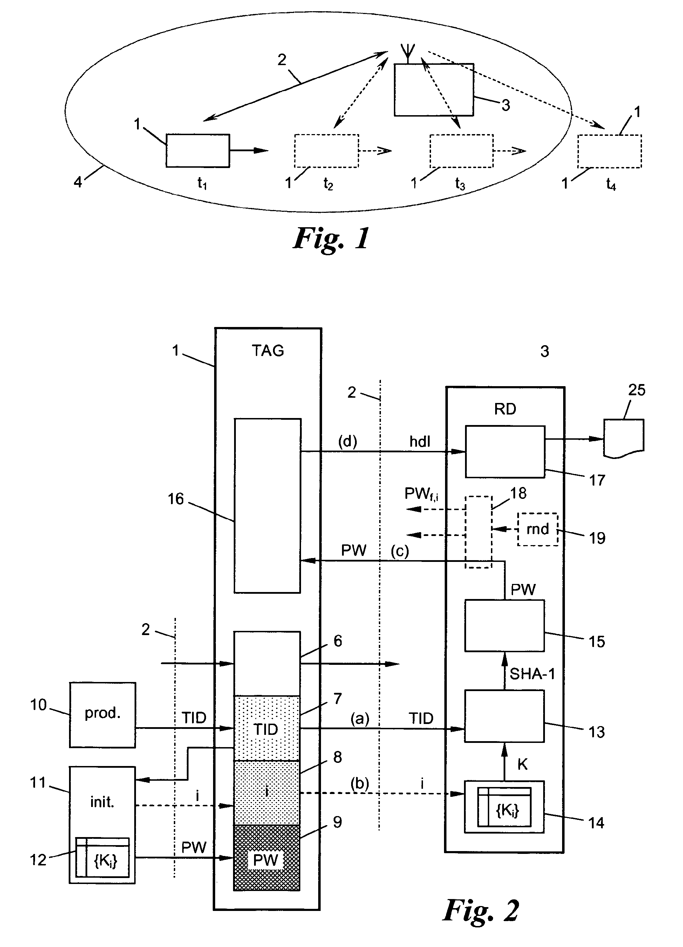

Fig. 1 zeigt ein RFID-Tag (radio frequency identification tag) 1, das zu einem Zeitpunkt $t_1$ über eine Funkschnittstelle 2 Funkkommunikationen mit einem RFID-Reader 3 abwickelt. Die Funkreichweite der Funkschnittstelle 2 rund um den Reader 3 ist mit 4 bezeichnet. Das Tag 1 bewegt sich am Reader 3 vorbei in Richtung des Pfeils 5. Mit strichlierten Linien sind drei weitere Stellungen des Tags 1 zu aufeinanderfolgenden Zeitpunkten $t_2$, $t_3$, $t_4$ eingezeichnet, zu welchen jeweils weitere Funkkommunikationen über die Funkschnittstelle 2 stattfinden.

Der Inhalt der Funkkommunikationen bzw. Datenpakete, die über die Funkschnittstelle 2 zwischen dem Tag 1 und Reader 3 ausgetauscht werden, ist beliebiger Art, und im Folgenden werden nur jene Teile des Kommunikationsprotokolls über die Funkschnittstelle 2 beschrieben, welche sich mit der Authentifizierung des Tags 1 gegenüber dem Reader 3 befassen.

Die an dem Authentifizierungsprozess beteiligten Komponenten und grundlegenden Verfahrensschrittes werden anhand von Fig. 2 erläutert, welche ein Tag 1 nach dem ISO-Standard 18000-6C bzw. 18000-63 beschreibt. Es versteht sich, dass das Tag 1, das Protokoll auf der Funkschnittstelle 2 und der Reader 3 auch nach einem anderen, die beschriebenen Authentifizierungsfunktionalitäten bereitstellenden Standard ausgebildet sein können.

Gemäß Fig. 2 umfasst das Tag 1 vier unterschiedlich stark geschützte Speicherbereiche 6 - 9, und zwar:

- einen ersten Speicherbereich 6, der beliebig über die Funkschnittstelle 2 les- und schreibbar ist, z.B. für Anwendungsprogramme, die auf einem Reader 3 laufen;
- einen zweiten, über die Funkschnittstelle 2 auslesbaren Speicherbereich 7 zur Aufnahme einer eindeutigen, tagspezifischen Kennung TID; der Speicherbereich 7 ist nur im Zuge der Fertigung des Tags 1 von einem Fertigungsprozess 10 beschreibbar, welcher die eindeutigen Tag-Kennungen TID vergibt, und ist sonst schreibgeschützt;
- einen dritten Speicherbereich 8, der bei der benutzerspezifischen Initialisierung des Tags 1 von einem Initialisierungsprozess 11 beschrieben werden kann, nachher schreibgeschützt ist, und anschließend über die Funkschnittstelle 2 auslesbar ist; der Initialisierungsprozess 11 kann beispielsweise von einem Benutzer, z.B. Systembetreiber, der eine Charge von Tags 1 mit unterschiedlichen Tag-Kennungen TID erwirbt, mit benutzerspezifischen (betreiberspezifischen) Daten beschrieben werden, beispielsweise einer Kennung des Betreibers oder einem Index i, der auf einen von mehreren, in einer Schlüsseltabelle 12 des Prozesses 11 gespeicherten benutzerspezifischen Schlüsseln $K_i$ verweist; und

- einen reservierten, über die Funkschnittstelle 2 nicht auslesbaren Speicherbereich 9, in dem nur der Benutzerinitialisierungsprozess 11 Daten hinterlegen kann, hier ein Passwort ("access password") PW, und auf den nur bestimmte Prozesse im Tag 1 selbst zugreifen können, wie später noch ausführlicher erläutert.

Das Passwort PW wird bei der Initialisierung des Tags 1 vom Prozess 11 einerseits aus der Tag-Kennung TID und andererseits aus dem benutzerspezifischen Schlüssel $K_i$ gebildet, beispielsweise nach einem Hash-Algorithmus der Form:

$$\mathtt{PW\ =\ truncate(SHA\text{-}1(concatinate(K_i+TID)))}$$

Auf Basis dieser Speicherstruktur, Konfiguration und Initialisierung kann ein Tag 1 gegenüber einem Reader 3, der über den bzw. die benutzerspezifischen Schlüssel $K_i$ verfügt, wie folgt authentifiziert werden.

In einem ersten Schritt (a) wird von einem Prozess 13 im Reader 3 die Tag-Kennung TID aus dem schreibgeschützten, jedoch öffentlich zugänglichen Speicherbereich 7 über die Funkschnittstelle 2 ausgelesen. Anschließend wird im Schritt (b) noch der Schlüsselindex i aus dem schreibgeschützten, jedoch öffentlich zugänglichen Speicherbereich 8 über Schnittstelle 2 ausgelesen und der entsprechende Schlüssel $K_i$ aus einer Schlüsseltabelle 14 des Readers 3 herausgesucht, welche der Schlüsseltabelle 12 des Benutzers bzw. Initialisierungsprozess 11 entspricht. Falls nur ein einziger Schlüssel K verwendet werden soll, erübrigt sich das Einspeichern und Aufsuchen des Schlüsselindex i, d.h. Schritt (b) entfällt.

$$\mathtt{Im\ Prozess\ 13\ wird\ anschließend\ der\ Hash\text{-}Wert}$$

$$\mathtt{SHA\text{-}1(concatinate(K_i+TID))}$$

gebildet und durch Trunkieren im Schritt 15 das Access-Passwort PW für das Tag 1 erzeugt.

Das Passwort PW wird anschließend im Schritt (c) an einen Überprüfungsprozess 16 im Tag 1 gesandt, welcher das empfangene Passwort PW mit dem im geschützten, nur für den Prozess 16 zugänglichen Speicherbereich 9 gespeicherten Passwort PW vergleicht. Nur im Gleichheitsfall wird in einem Schritt (d) eine Bestätigungsantwort ("handle") hdl über die Funkschnittstelle 2 an den anfragenden Reader 3 zurückgesandt; der Empfang einer solchen Bestätigungsantwort im Reader 3 authentifiziert das Tag 1 als echt (authentisch).

Um Betrugsversuche mittels gefälschter Tags 1 zu verhindern, welche auf Empfang jedes beliebigen, auch falschen (d.h. dem im Bereich 9 gespeicherten Passwort PW nicht gleichenden) Passwort PW im Schritt (c) dennoch stets mit einer Bestätigungsantwort hdl in Schritt (d) antworten, dienen die folgenden Erweiterungen des geschilderten Verfahrens.

Neben dem "richtigen" Passwort PW, das in der geschilderten Weise auf Basis des benutzerspezifischen Schlüssels $K_i$ und der tagspezifischen Kennung TID nach einer bekannten Ableitungsvorschrift, z.B. dem genannten Hash-Verfahren, gebildet wird, erzeugt der Reader 3 einige weitere "falsche" Passwörter $PW_{f,j}$, wie durch den Block 18 in Fig. 2 veranschaulicht, beispielsweise von einem Zufallsgenerator 19 gesteuert. Der Reader 3 sendet nun nicht nur das "richtige" Passwort PW, im weiteren $PW_r$ bezeichnet, an das Tag 1, sondern auch zumindest ein "falsches" Passwort $PW_{f,j}$.

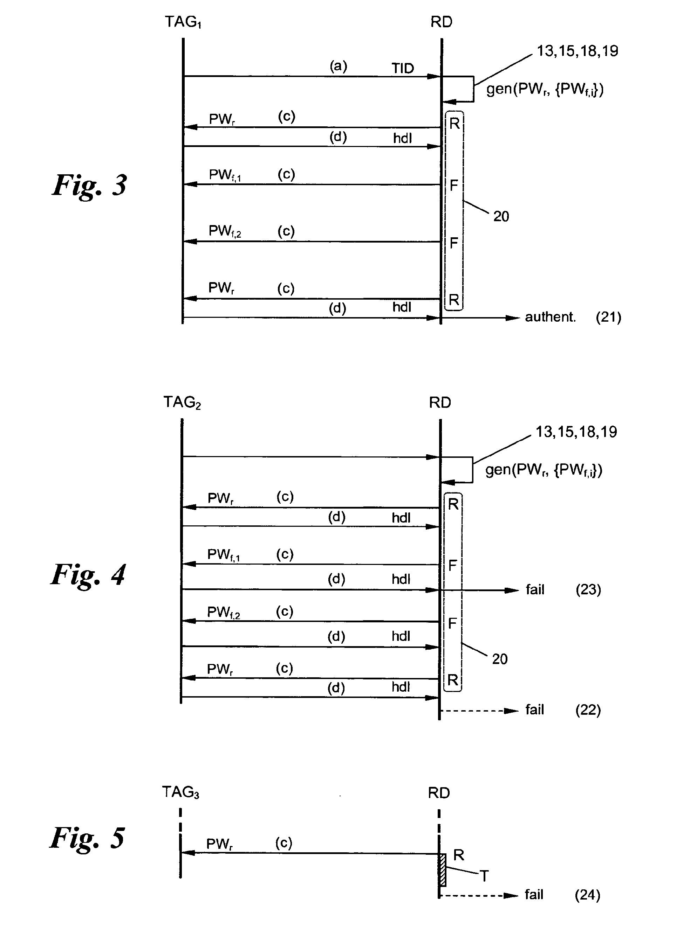

Fig. 3 zeigt die Reaktion eines echten, d.h. authentischen Tags 1 ($TAG_1$) auf eine solche Folge 20 von Passwortübersendungen (c). Die Fig. 4 und 5 zeigen demgegenüber die Reaktion eines gefälschten Tags 1 ($TAG_2$) auf dieselbe Folge 20. Die hier beispielhaft gezeigte Folge 20 ist richtig (R) - falsch (F) - falsch (F) - richtig (R), d.h. $PW_r$ - $PW_{f,1}$ - $PW_{f,2}$ - $PW_r$. Wie ersichtlich antwortet das echte RFID-Tag $TAG_1$ nur auf richtige Passwörter $PW_r$ mit einer Bestätigungsantwort hdl (d), wogegen ein gefälschtes bzw. unechtes RFID-Tag $TAG_2$, $TAG_3$ stets mit einer Bestätigungsantwort hdl antwortet (d), auch bei falschen Passwörtern $PW_{f,1}$, $PW_{f,2}$.

Der Reader 3 (RD) überprüft nun nach - oder während - der Durchführung der Folge 20, ob dazu auch die richtige Folge von Antworten (d) erhalten wurde, d.h. bei der beispielhaften Folge 20 "R-F-F-R" eine ebensolche Antwortfolge "hdl - keine Antwort - keine Antwort - hdl". Falls zu *keinem* falschen Passwort $PW_{f,j}$ eine Bestätigungsantwort hdl erhalten wird, wird das Tag 1 authentifiziert (21), andernfalls nicht (22).

Wie in dem Beispiel von Fig. 4 gezeigt, kann das Verfahren bereits abgebrochen und das Tag 1 für nicht-authentisch detektiert werden, sobald erstmals zu einem falschen Passwort $PW_{f,j}$ eine Bestätigungsantwort hdl erhalten wird (23).

Auch kann das Verfahren abgebrochen und das Tag 1 für nicht-authentisch detektiert werden, wenn zu einem richtigen Passwort $PW_r$ - bevorzugt innerhalb einer Zeitspanne T - keine Bestätigungsantwort hdl erhalten wird, siehe Schritt 24 in Fig. 5.

Nicht nur der Inhalt der falschen Passwörter $PW_{f,j}$ kann zufällig erzeugt werden, sondern auch die Abfolge an richtigen und falschen Passwörter in der Folge 20 kann vom Zufallsgenerator 19 bestimmt werden. Die Anzahl an richtigen und falschen Passwörtern $PW_r$, $PW_{f,j}$ in der Folge 20 kann beliebig groß gewählt werden, je mehr, desto sicherer wird das Authentifizierungsverfahren. Zumindest sind ein richtiges Passwort $PW_r$ und ein falsches Passwort $PW_f$ in der Folge 20 erforderlich. Beispielsweise können solange Passwortabfragen (c) vom Reader 3 an ein Tag 1 gesandt, damit die Folge 20 fortgesetzt und die Antworten (d) ausgewertet werden, solange sich das Tag 1 in Funkreichweite 4 des Readers 3 befindet.

Um festzustellen, ob sich ein Tag 1 noch in der Funkreichweite 4 eines Readers 3 befindet, d.h. überhaupt auf ein richtiges Passwort $PW_r$ antworten könnte, kann die Folge 20 auch so kurz festgelegt werden, dass die Anzahl an Abfragen (c) jedenfalls in dem Zeitraum $t_3$ - $t_1$ Platz findet, in dem sich ein Tag 1 mit der Geschwindigkeit 5 durch den Funkabdeckungsbereich 4 des Readers 3 bewegt. Gleichzeitig kann festgelegt werden, dass das letzte Passwort PW der Folge 20 jedenfalls stets ein richtiges Passwort $PW_r$ ist, auf das eine Bestätigungsantwort hdl erwartet werden kann. Alternativ oder zusätzlich kann mit Hilfe anderer Maßnahmen festgestellt werden, ob sich ein Tag 1 in der Funkreichweite 4 befindet, beispielsweise durch weitere, vom Reader 3 ausgehende Funkabfragen über die Funkschnittstelle 2.

Sobald ein Tag 1 als falsch erkannt wurde (Schritte 22, 23, 24), kann die Tag-Kennung TID dieses Tags 1 in einer Blacklist 25 im Reader 3 oder einer daran angeschlossenen Einheit gespeichert werden. Die Blacklist 25 kann bereits im Schritt (a), wenn die Tag-Kennung TID eines zur authentifizierenden Tags 1 abgefragt wird, konsultiert werden, ob die empfangene Kennung TID darin vorkommt, und, wenn ja, das Tag 1 sofort als nicht-authentisch erkannt werden.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum Authentifizieren eines RFID-Tags (1) mit Hilfe eines RFID-Readers (3) über eine Funkschnittstelle (2) zwischen diesen, wobei im RFID-Reader (3) ein benutzerspezifischer Schlüssel ($K_i$) gespeichert ist und im RFID-Tag eine tagspezifische Kennung und ein aus der Kennung (TID) und dem Schlüssel ($K_i$) nach einer bekannten Ableitungsfunktion erzeugtes Passwort (PW) gespeichert sind, und wobei ein authentisches RFID-Tag (1) nur bei Empfang des richtigen Passworts ($PW_r$), hingegen ein nicht-authentisches RFID-Tag (1) bei Empfang eines beliebigen Passworts ($PW_f$) über die Funkschnittstelle (2) eine Bestätigungsantwort (hdl) zurücksendet, umfassend die folgenden, im RFID-Reader (3) ablaufenden Schritte:

   Empfangen (a) der Kennung (TID) eines zu authentifizierenden RFID-Tags (1) über die Funkschnittstelle (2), Erzeugen (13 - 15) des richtigen Passworts ($PW_r$) aus der empfangenen Kennung (TID) und dem gespeicherten Schlüssel ($K_i$) nach der bekannten Ableitungsfunktion, und Erzeugen (18 - 19) zumindest eines vom richtigen Passwort ($PW_r$) abweichenden falschen Passworts ($PW_f$), Senden einer Folge (20) von zumindest zwei Passwörtern ($PW_r$, $PW_{f,j}$), von denen zumindest eines richtig und zumindest eines falsch ist, über die Funkschnittstelle (2) an das RFID-Tag (1), und Authentifizieren des RFID-Tags, wenn zu keinem falschen Passwort ($PW_{f,j}$) eine Bestätigungsantwort (hdl) empfangen wird.

2. Verfahren nach Anspruch 1, **dadurch gekennzeichnet, dass** die Abfolge (20) von richtigen und falschen Passwörtern ($PW_r$, $PW_{f,j}$) in der genannten Folge (20) zufällig gewählt wird.

3. Verfahren nach Anspruch 1 oder 2, **dadurch gekennzeichnet, dass** das Senden (d) der Folge (20) abgebrochen wird, sobald zu einem falschen Passwort ($PW_{f,j}$) eine Bestätigungsantwort (hdl) erhalten wird.

4. Verfahren nach einem der Ansprüche 1 bis 3, **dadurch gekennzeichnet, dass** das Senden (d) der Folge (20) abgebrochen wird, sobald zu einem richtigen Passwort ($PW_r$) keine Bestätigungsantwort (hdl) erhalten wird, und das RFID-Tag (1) daraufhin nicht authentifiziert wird.

5. Verfahren nach einem der Ansprüche 1 bis 4, **dadurch gekennzeichnet, dass** das letzte Passwort der Folge (20) ein richtiges Passwort ($PW_r$) ist.

6. Verfahren nach einem der Ansprüche 1 bis 4, **dadurch gekennzeichnet, dass** das Senden (d) der Folge (20) solange fortgesetzt wird, solange sich das RFID-Tag (1) in Funkreichweite (4) der Funkschnittstelle (2) befindet.

7. Verfahren nach Anspruch 6, **dadurch gekennzeichnet, dass** die Funkreichweite (4) durch vom RFID-Reader (3) ausgehende Funkabfragen des RFID-Tags (1) gemessen wird.

8. Verfahren nach einem der Ansprüche 1 bis 7, **dadurch gekennzeichnet, dass** die Kennung (TID) eines RFID-Tags (1), das zu einem falschen Passwort ($PW_{f,j}$) eine Bestätigungsantwort (hdl) gesendet hat, in einer Blacklist (25) gespeichert wird.

9. Verfahren nach Anspruch 8, **dadurch gekennzeichnet, dass** nach dem Empfangen (a) der Kennung (TID) eines zu authentifizierenden RFID-Tags (1) überprüft wird, ob die empfangene Kennung (TID) in der Blacklist (25) gespeichert ist, und wenn ja, das RFID-Tag (1) nicht authentifiziert und das Verfahren abgebrochen wird.

10. Verfahren nach einem der Ansprüche 1 bis 9, **dadurch gekennzeichnet, dass** das RFID-Tag (1) und der RFID-Reader (3) nach dem Standard ISO 18000-6C, ISO 18000-63 oder einem damit kompatiblen Standard arbeiten.

## Claims

1. A method for authenticating an RFID tag (1) by means of an RFID reader (3) via a radio interface (2) therebetween, wherein a user-specific key ($K_i$) is stored in the RFID reader (3) and a tag-specific identifier (TID) and a password (PW) generated from the identifier (TID) and the key ($K_i$) in accordance with a known derivative function are stored in the RFID tag, and wherein an authentic RFID tag (1) sends back a confirmation response (hdl) via the radio interface (2) only upon receipt of the correct password ($PW_r$), by contrast a non-authentic RFID tag (1) sends back a confirmation response (hdl) via the radio interface (2) upon receipt of any password ($PW_f$), comprising following steps performed in the RFID reader (3) :

   receiving (a) via the radio interface (2) the identifier (TID) of an RFID tag (1) to be authenticated;
   generating (13 - 15) the correct password ($PW_r$) from the received identifier (TID) and the stored key ($K_i$) in accordance with the known derivative function, and generating (18 - 19) at least one incorrect password ($PW_f$) differing from the correct password ($PW_r$);
   sending a series (20) of at least two passwords ($PW_r$, $PW_{f,j}$), of which at least one is correct and at least one is incorrect, via the radio interface (2) to the RFID tag (1); and
   authenticating the RFID tag if no confirmation response (hdl) is received to any incorrect password ($PW_{f,j}$).

2. The method according to Claim 1, **characterised in that** the order (20) of correct and incorrect passwords ($PW_r$, $PW_{f,j}$) in said series (20) is selected randomly.

3. The method according to Claim 1 or 2, **characterised in that** the transmission (d) of the series (20) is aborted as soon as a confirmation response (hdl) is received in response to an incorrect password ($PW_{f,j}$).

4. The method according to one of Claims 1 to 3, **characterised in that** the transmission (d) of the series (20) is aborted as soon as no confirmation response (hdl) is received in response to a correct password ($PW_r$), and the RFID tag (1) is then not authenticated.

5. The method according to one of Claims 1 to 4, **characterised in that** the last password of the series (20) is a correct password ($PW_r$).

6. The method according to one of Claims 1 to 4, **characterised in that** the transmission (d) of the series (20) is continued as long as the RFID tag (1) is within the range (4) of the radio interface (2).

7. The method according to Claim 6, **characterised in that** the range (4) is measured by radio interrogations of the RFID tag (1) output by the RFID reader (3).

8. The method according to one of Claims 1 to 7, **characterised in that** the identifier (TID) of an RFID tag (1) that has transmitted a confirmation response (hdl) in response to an incorrect password ($PW_{f,j}$) is stored in a blacklist (25).

9. The method according to Claim 8, **characterised in that**, following the receipt (a) of the identifier (TID) of an RFID tag (1) to be authenticated, it is checked whether the received identifier (TID) is stored in the blacklist (25), and, if so, the RFID tag (1) is not authenticated and the method is aborted.

10. The method according to one of Claims 1 to 9, **characterised in that** the RFID tag (1) and the RFID reader (3) operate in accordance with standard ISO 18000-6C, ISO 18000-63 or a standard compatible therewith.


**Revendications**

1. Procédé pour l'authentification d'une étiquette RFID (1) à l'aide d'un lecteur RFID (3) par l'intermédiaire d'une interface radio (2) entre ceux-ci, dans lequel une clé ($K_i$) spécifique à un utilisateur est stockée dans le lecteur RFID (3), et un identifiant spécifique à l'étiquette dans l'étiquette RFID et un mot de passe (PW) généré à partir de l'identifiant (TID) et de la clé ($K_i$) selon une fonction de dérivation connue sont stockés, et dans lequel une étiquette RFID (1) authentique ne renvoie une réponse de confirmation (hdl) par l'intermédiaire de l'interface radio (2) uniquement lors de la réception du mot de passe (PW) correct, contrairement à une étiquette RFID (1) non authentique qui renvoie une réponse de confirmation (hdl) par l'intermédiaire de l'interface radio (2) lors de la réception d'un mot de passe ($PW_f$) quelconque, comprenant les étapes suivantes déroulant dans le lecteur RFID (3):

   réception (a) de l'identifiant (TID) d'une étiquette RFID (1) à authentifier par l'intermédiaire de l'interface radio (2), génération (13 à 15) du mot de passe correct ($PW_r$) à partir de l'identifiant (TID) réceptionné et de la clé ($K_i$) enregistrée selon la fonction de dérivation connue, et génération (18 à 19) d'au moins un mot de passe erroné ($PW_f$) différent du mot de passe correct ($PW_r$),
   envoi d'une suite (20) d'au moins deux mots de passe ($PW_r$, $Pw_{f,j}$) vers l'étiquette RFID (1), parmi lesquels au moins un est correct et au moins un est erroné, par l'intermédiaire de l'interface radio (2), et
   authentification de l'étiquette RFID lorsqu'une réponse de confirmation (hdl) n'est reçue pour aucun mot de passe erroné ($PW_{f,j}$).

2. Procédé selon la revendication 1, **caractérisé en ce que** la suite (20) des mots de passe correct et erroné ($PW_r$, $PW_{r,j}$) est choisie au hasard dans ladite suite (20).

3. Procédé selon les revendications 1 ou 2, **caractérisé en ce que** l'envoi (d) de la suite (20) est interrompu dès qu'une réponse de confirmation (hdl) est obtenue pour un mot de passe erroné ($PW_{f,j}$).

4. Procédé selon l'une des revendications 1 à 3, **caractérisé en ce que** l'envoi (d) de la suite (20) est interrompu dès qu'aucune réponse de confirmation (hdl) n'est obtenue pour un mot de passe correct ($PW_r$), et que l'étiquette RFID (1) n'est pas authentifiée à la suite de cela.

5. Procédé selon l'une des revendications 1 à 4, **caractérisé en ce que** le dernier mot de passe de la suite (20) est un mot de passe correct ($PW_r$).

6. Procédé selon l'une des revendications 1 à 4, **caractérisé en ce que** l'envoi (d) de la suite (20) est prolongé aussi longtemps que l'étiquette RFID (1) se trouve à une portée radio (4) de l'interface radio (2).

7. Procédé selon la revendication 6, **caractérisé en ce que** la portée radio (4) est mesurée par des questionnements radio de l'étiquette RFID (1) par le lecteur RFID (3).

8. Procédé selon l'une des revendications 1 à 7, **caractérisé en ce que** l'identifiant (TID) d'une étiquette RFID (1) qui a envoyé une réponse de confirmation (hdl) correspondant à un mot de passe erroné ($PW_{f,j}$) est stocké sur une liste noire (25).

9. Procédé selon la revendication 8, **caractérisé en ce qu'**après la réception (a) de l'identifiant (TID) d'une étiquette RFID (1) à authentifier il est contrôlé pour savoir si l'identifiant (TID) réceptionné est stocké dans la liste noire (25) et si oui, l'étiquette RFID (1) n'est pas authentifiée et le procédé est interrompu.

10. Procédé selon l'une des revendications 1 à 9, **caractérisé en ce que** l'étiquette RFID (1) et le lecteur RFID (3) travaillent selon la norme ISO 18000-6C, ISO 18000-63 ou une norme compatible avec celles-ci.

**Fig. 1**

**Fig. 2**

**Fig. 3**

TAG₁ ... RD

(a) TID

13,15,18,19

gen(PW$_r$, {PW$_{f,i}$})

PW$_r$ (c)

(d) hdl

R

PW$_{f,1}$ (c)

F

20

PW$_{f,2}$ (c)

F

PW$_r$ (c)

R

(d) hdl

authent. (21)

**Fig. 4**

TAG₂ ... RD

13,15,18,19

gen(PW$_r$, {PW$_{f,i}$})

PW$_r$ (c)

R

(d) hdl

PW$_{f,1}$ (c)

F

(d) hdl

fail (23)

PW$_{f,2}$ (c)

F

(d) hdl

20

PW$_r$ (c)

R

(d) hdl

fail (22)

**Fig. 5**

TAG₃ ... RD

PW$_r$ (c)

R

T

fail (24)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100289627 A1

- WO 2008085135 A1

**In der Beschreibung aufgeführte Nicht-Patentliteratur**

- *Specification for RFID Air Interface EPC(TM) Radio-Frequency Identity Protocols Class-1 Generation-2 UHF RFID Protocol for Communications at 860 MHz - 960 MHz,* 23. Oktober 2008